Europäisches Patentamt

European Patent Office

Office européen des brevets

(19)

(11) Veröffentlichungsnummer : **0 095 051**
**B1**

(12) # EUROPÄISCHE PATENTSCHRIFT

(45) Veröffentlichungstag der Patentschrift :
16.06.87

(51) Int. Cl.⁴ : **H 01 T 19/00**

(21) Anmeldenummer : 83104104.1

(22) Anmeldetag : 27.04.83

(54) **Vorrichtung zur Elektrischen Vorbehandlung von nichtleitenden Folien.**

(30) Priorität : 25.05.82 DE 3219538

(43) Veröffentlichungstag der Anmeldung :
30.11.83 Patentblatt 83/48

(45) Bekanntmachung des Hinweises auf die Patenterteilung : 16.06.87 Patentblatt 87/25

(84) Benannte Vertragsstaaten :
BE DE FR GB IT LU NL SE

(56) Entgegenhaltungen :
EP-A- 0 014 552
DE-A- 2 532 747
DE-A- 2 550 810
DE-A- 2 834 366
DE-C- 1 257 414
FR-A- 1 334 067
FR-A- 2 176 914
FR-A- 2 323 514
FR-A- 2 335 074
US-A- 2 939 956
US-A- 3 133 193
US-A- 3 777 164

(73) Patentinhaber : SOFTAL electronic GmbH
Friedrich-Ebert-Damm 202a
D-2000 Hamburg 70 (DE)

(72) Erfinder : **Prinz, Eckhard**
**Haffkamp 11**
**D-2071 Rotenbek (DE)**
Erfinder : **Kluss, Bruno**
**Jakob-Kaiser-Strasse 16**
**D-2050 Hamburg 80 (DE)**

(74) Vertreter : **von Raffay, Vincenz, Dipl.-Ing. et al**
**Patentanwälte Raffay, Fleck & Partner Postfach 32 32**
**17**
**D-2000 Hamburg 13 (DE)**

## Beschreibung

Die Erfindung betrifft eine Vorrichtung nach dem Oberbegriff des Patentanspruches 1.

Aus der FR-A-1 334 067 ist eine Vorrichtung der vorstehend genannten Art bekannt. Diese Vorrichtung arbeitet allerdings nicht im Hochfrequenzbereich, so daß die Probleme, die bei Hochfrequenzbehandlung auftreten, bei dieser bekannten Vorrichtung grundsätzlich nicht auftreten. Cirka über die Hälfte des Umfanges der Walzenelektrode sind in verhältnismäßig großem Abstand zueinander einer Anzahl von Messerelektrodenanordnungen vorgesehen. Jede Messerelektrodenanordnung weist Messerkanten auf, die in Bewegungsrichtung des Folie verlaufen. Hierdurch entsteht in Bewegungsrichtung eine streifenförmige, d. h. ungleichmäßige Behandlung.

Aus der DE-A-2 532 747 ist eine anders ausgestaltete Vorrichtung bekannt, bei der ein Gehäuse vorgesehen ist, das an eine Unterdruckquelle angeschlossen ist. Die Enden der Seitenwände des Gehäuses bilden die Entladungskanten, die daher einen großen Abstand untereinander aufweisen. Der Anschluß an die Unterdruckquelle erfolgt, um für eine Entgiftung zu sorgen.

Schließlich ist aus der EP-A-0 014 552 eine Vorrichtung zur elektrischen Oberflächenbehandlung bekannt, bei der stangenförmige Elektroden vorgesehen sind, die in Bewegungsrichtung der Folie einen Abstand von 10 mm, die hierdurch gebildeten Reihen untereinander senkrecht zur Bewegungsrichtung der Folie jedoch einen großen Abstand im Bereich von 30 mm aufweisen. Es handelt sich nicht um Messerelektrodenanordnungen, sondern um einzelne Stangen oder Stäbe, die eine Reihe bilden, die senkrecht zur Bewegungsrichtung der Folie einen relativ großen Abstand aufweisen.

Der Erfindung liegt nun die Aufgabe zugrunde, eine Vorrichtung der eingangs genannten Art zu schaffen, durch die das Verhältnis der aufgewendeten spezifischen Energie zum erzeugten Behandlungsergebnis, d. h. der Oberflächenspannung, erheblich verbessert wird.

Diese Aufgabe wird durch das Kennzeichen des Anspruches 1 gelöst.

Dadurch, daß die Messerelektrodenanordnung Messerkanten aufweist, die senkrecht zur Bewegungsrichtung der Folie verlaufen und einen geringen Abstand von ca. 7 mm aufweisen, wird das Behandlungsergebnis im Verhältnis zu der aufgewendeten Energie praktisch verdoppelt, wie Versuche gezeigt haben. Es können auch Folien behandelt werden, die bisher überhaupt nicht behandelt werden konnten, d. h. die anschließend bedruckt oder auf andere Weise weiterverarbeitet werden sollen. Dadurch, daß nur ein sehr kleiner Umfangsabschnitt sehr intensiv behandelt wird, ist das Ergebnis entsprechend günstig. Die Anordnung in einer Unterdruckkammer verhindert eine thermische Überlasung und sorgt auch für die Absaugung des Ozons. Da sich die Behandlungsstrecke nur über einen sehr kleinen Winkel der Walzenelektrode erstreckt, kann die Folie flach ab- und wieder zugeführt werden. Zusätzliche Umlenkrollen sind nicht erforderlich.

Weitere vorteilhafte Ausgestaltungen sind Gegenstand der Ansprüche 2 bis 5.

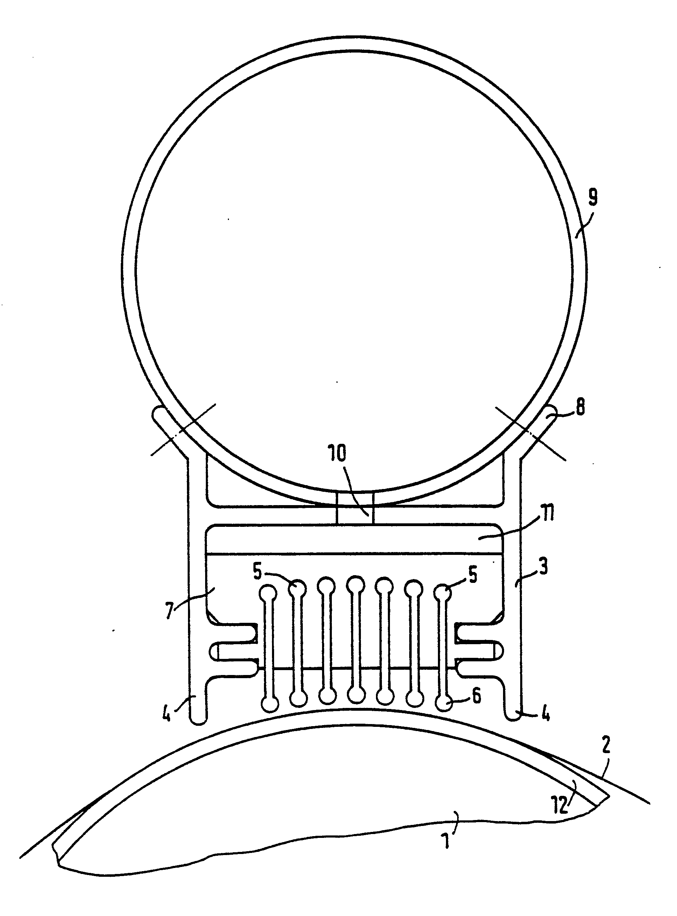

Im folgenden wird die Erfindung unter Hinweis auf die Zeichnung anhand eines Ausführungsbeispieles näher erläutert.

In der einzigen Figur ist eine Ausführungsform nach der Erfindung schematisch im Querschnitt dargestellt. Auf die Darstelung einer Längsansicht wurde verzichtet, da sich diese für den Fachmann beim Betrachten des Querschnittes in Verbindung mit der Beschreibung ergibt.

Derartige Vorrichtungen werden für die unterschiedlichsten Folien aus Kunststoff, Papier oder Metall oder aber auch aus entsprechenden Verbundfolien eingesetzt, um die Oberflächenenergie oder die Oberflächenspannung dieser Folien zu erhöhen, damit diese weiterverarbeitet werden können. Beispielsweise müssen diese Folien anschließend bedruckt, verklebt oder verschweißt werden. Dieses ist nur möglich, wenn die Oberfläche in entsprechender Weise elektrisch vorbehandelt wurde. Diese elektrische Vorbehandlung wird auch als Behandlung durch Coronaentladung bezeichnet.

Die in der Zeichnung dargestellte Vorrichtung besteht aus einer Walzenelektrode 1, die die an Masse liegende Gegenelektrode bildet und mit einem Dielektrikum 12 überzogen ist. Über diese Walzenelektrode, die drehbar gelagert ist, wird die Folie 2 geführt.

Die an Spannung liegende Elektrode ist in einem Gehäuse 3 angeordnet. Sie wird bei der dargestellten Ausführungsform durch sieben Messerelektroden 5 gebildet, deren Entladungskanten 6 halbkreisförmig oder abgerundet sind und einen im wesentlichen konstanten Abstand zur Walzenelektrode 1 und damit zur Folie 2 aufweisen. Das Gehäuse 3 besteht aus Kunststoff, vorzugsweise aus GfK. Gleiches gilt für den Elektrodenhalter 7, von dem in Längsrichtung eine entsprechende Anzahl angeordnet sind, um die Elektroden sicher und fest zu halten. Zwischen den einzelnen Elektrodenhaltern 7 ist in Längsrichtung ein verhältnismäßig großer Abstand vorgesehen.

Das Gehäuse 3 bildet mit seinen Seitenwänden 4, die bis in die Nähe der Walzenelektrode 1 verlaufen, eine Unterdruckkammer, in der die Messerelektroden 5 angeordnet sind. Der Innenraum dieser Unterdruckkammer ist mit 11 bezeichnet. Dieser Innenraum 11 ist über eine Verbindung 10 mit dem Innenraum eines Trägerrohres 9 verbunden, das parallel zur Walzenelektrode 1 angeordnet ist. Die Unterdruckquelle, die an den Innenraum des Trägerrohres 9 angeschlossen ist, ist nicht gezeigt. Das Trägerrohr 9 ist bei 8 dem Gehäuse 3 verbunden.

Wesentlich für die Erfindung ist, daß eine Anzahl von Messerelektroden, vorzugsweise mit abgerundeten oder halbkreisförmigen Entladungskanten vorgesehen sind, die einen konstanten Abstand zur Walzenelektrode 1 und damit zur Folie 2 aufweisen. In Verbindung mit der Anlegung des Unterdrucks, der durch die heruntergezogenen Seitenwände stabilisiert wird, konnten hervorragende Behandlungsergebnisse erzielt werden. Bei Einsatz einer spezifischen Energie (W · min/m$^2$) von 12 wurde eine Oberflächenspannung (mN/m) von 48 erzielt. Bei einer spezifischen Energie 16 lag die Oberflächenspannung cá. 54 und bei einer spezifischen Energie von 20 bei ca. 58. Diese Ergebnisse wurden mit einer abgelagerten Polyäthylen-Folie erzielt und bedeuten praktisch eine Verdoppelung im Verhältnis zu bekannten Vorrichtungen bei entsprechendem Einsatz gleicher spezifischer Energie.

Es wurde mit einer Spannung zwischen 10 und 15 kV und in einem Frequenzbereich um 20 kHz gearbeitet. Bei einer anderen — nicht gezeigten Ausführungsform — zur Behandlung von leitenden Folien, wie z. B. Aluminium, ist das Dielektrikum nicht auf der Walzenelektrode 1 vorgesehen, sondern die Messerelektroden 5 sind mit Dielektrikum überzogen.

## Patentansprüche

1. Vorrichtung zur elektrischen Vorbehandlung von Folien (2) zur Erhöhung der Oberflächenspannung mit einer Walzenelektrode (1) als Gegenelektrode, über die die zu behandelnde Folie (2) geführt wird, und mit einer über die Behandlungsbreite verlaufenden Messerelektrodenanordnung, die aus mindestens drei parallel zueinander ausgerichteten Messerkanten besteht und deren Entladungskanten (6) einen konstanten Abstand zur Oberfläche der Walzenelektrode (1) aufweisen, dadurch gekennzeichnet, daß die Messerkanten senkrecht zur Bewegungsrichtung der Folie (2) ausgerichtet sind, daß die einzelnen Messerelektroden (5) im Abstand von ca. 7 mm angeordnet sind, wobei der Durchmesser ihrer abgerundeten oder halbkreisförmigen Entladungskanten (6) ca. 3 mm beträgt, und daß die Messerelektrodenanordnung in einem Gehäuse (3) angeordnet ist, dessen Innenraum (11) mit einer Unterdruckquelle verbunden ist.

2. Vorrichtung nach Anspruch 1, dadurch gekennzeichnet, daß die Seitenwände (4) des Gehäuses (3), die parallel zu den Messerelektroden (5) verlaufen, bis in die Nähe der Oberfläche der Walzenelektrode (1) reichen.

3. Vorrichtung nach Anspruch 2, dadurch gekennzeichnet, daß das Gehäuse (3) mit einem parallel zur Walzenelektrode (1) verlaufenden Trägerrohr (9) verbunden ist, das der Verbindung mit der Unterdruckquelle dient.

4. Vorrichtung nach Anspruch 1, dadurch gekennzeichnet, daß sieben parallel zueinander liegende Messerelektroden (5) vorgesehen sind.

5. Vorrichtung nach einem oder mehreren der vorstehenden Ansprüche, dadurch gekennzeichnet, daß die Messerelektroden (5) mit einem dielektrischen Material überzogen sind.

## Claims

1. Apparatus for electrically treating of foils (2) to increase the surface tension, having a roller electrode (1), which forms the counter-electrode and over which the foil (2) to be treated is passed and having a knife electrode, which runs over the width of treatment and which consists of at least three parallel to one another extending knife edges, the discharge edges (6) of which having a constant distance to the surface of the roller electrode (1), characterized in that the knife edges are aligned vertically to the direction of movement of the foil (2), in that the single knife electrodes (5) are positioned in a distance of about 7 mm, the diameter of their rounded or half-circle discharge edges (6) is about 3 mm and in that the knife electrode arrangement is in a housing (3), the interior (11) of which is connected to a vacuum source.

2. Apparatus according to claim 1, characterized in that the side walls (4) of the housing (3) which are parallel to the knife electrodes (5) pass into the vicinity of the surface of the roller electrode (1).

3. Apparatus according to claim 2, characterized in that the housing (3) is connected to a carrier tube (9) which is parallel to the roller electrode and which is connected to the vacuum source.

4. Apparatus according to claim 1, characterized in that seven knife electrodes (5) are provided which are parallel to one another.

5. Apparatus according to one or more of the preceding claims, characterized in that the knife electrodes (5) are covered with a dielectric material.

## Revendications

1. Dispositif pour le traitement électrique préalable de feuilles (2) pour augmenter la tension superficielle avec une électrode à rouleau (1) comme électrode antagoniste sur laquelle la feuille (2) à traiter est guidée et avec une disposition d'électrodes à couteau sur toute la largeur de traitement composée d'au moins trois arêtes de couteau orientées parallèlement les unes aux autres et dont les arêtes de décharge (6) présentent une distance constante par rapport à la surface de l'électrode à rouleau (1), caractérisé en ce que les arêtes de couteau sont orientées verticalement par rapport au sens de déplacement de la feuille (2), que les différentes électrodes à couteau (5) sont disposées à une distance de 7 mm environ, le diamètre de leurs arêtes de décharge (6) arrondies ou semi-circulaires étant de 3 mm environ, et que la disposition d'électrodes à couteau se trouve dans un boîtier (3) dont l'intérieur (11) est en relation avec une source de dépression.

2. Dispositif selon la revendication 1, caractérisé en ce que les parois latérales (4) du bâti (3), qui sont parallèles aux électrodes à couteau (5), s'étendent jusqu'à proximité de la surface de l'électrode à rouleau (1).

3. Dispositif selon la revendication 2, caractérisé en ce que le boîtier (3) est relié à un tube porteur (9), parallèle à l'électrode à rouleau (1), qui sert à la liaison avec la source de dépression.

4. Dispositif selon la revendication 1, caractérisé en ce que sept électrodes à couteau (5) situées parallèlement les unes par rapport aux autres sont prévues.

5. Dispositif selon l'une ou plusieurs revendications précédentes, caractérisé en ce que les électrodes à couteau (5) sont revêtues d'un matériau diélectrique.